# DEMANDE DE BREVET EUROPEEN

(11) **EP 1 138 273 A1**
(43) Date de publication de la demande: **04.10.2001**
(21) Numéro de dépôt: 01470007.4
(22) Date de dépôt: 21.03.2001
(51) Int. Cl.: A61C 13/12, A61C 19/00, B08B 15/04, B08B 15/02, B25H 1/20

(54) **Système de protection pour laboratoire de prothèses dentaires**

(30) Priorité: 23.03.2000 FR 0003691
(71) Demandeur: New Protect Systeme de Protection, 88270 Dompaire (FR)
(72) Inventeur: D'Alguerre, Michel, 88000 Epinal (FR)
(74) Mandataire: Poupon, Michel

(57) **Abrégé**

Dispositif de protection permettant le travail dans des conditions de sécurité optimales, en particulier mais non limitativement pour un prothésiste dentaire, du type se composant d'un capotage enveloppant par le dessus le champ de travail de l'utilisateur, ledit champ étant accessible aux avant-bras de celui-ci par le dessous et latéralement, la face frontale dudit capotage comportant une vitre protectrice caractérisé en ce que le capotage (2) est disposé à une extrémité d'une plaque support (6) dont il est solidaire, l'autre extrémité de ladite plaque étant amenée à se déplacer par coulissement dans un contrepoids (7) venant reposer sur le plan de travail.

Application : laboratoires de prothèses dentaires, et plus généralement tous corps de métier soumis à l'émission de poussières venant de l'abrasion par un outil tournant.

## Description

La présente invention a pour objet un dispositif de protection permettant le travail dans des conditions de sécurité optimales, en particulier mais non limitativement pour un prothésiste dentaire, du type se composant d'un capotage enveloppant par le dessus le champ de travail de l'utilisateur, ledit champ étant accessible aux avant-bras de celui-ci par le dessous et latéralement, la face frontale dudit capotage comportant une vitre protectrice.

Des dispositifs de protection de ce type sont en eux-mêmes connus, par exemple des brevet et demandes de brevet européens EP 0 093 257 et EP 0 930 134.

Les dispositifs décrits dans ces documents sont de structure très complexe. Ils sont essentiellement constitués d'un capotage disposé à l'extrémité d'un bras support autorisant plusieurs degrés de liberté de déplacement dans l'espace pour le capotage, le bras étant lui-même articulé sur une rotule fixée sur le plan de travail.

Outre la complexité du dispositif, celui-ci est nécessairement monté à demeure sur le plan de travail.

Le besoin existe dans la pratique de dispositifs de même fonctionnalité qui soient peu onéreux, qui puissent être installés et déplacés de manière non définitive et non destructive pour le plan de travail support et qui apportent une sécurité de travail optimale.

Conformément à l'invention, ce résultat est obtenu avec un dispositif de protection permettant le travail dans des conditions de sécurité optimales, en particulier mais non limitativement pour un prothésiste dentaire, du type se composant d'un capotage enveloppant par le dessus le champ de travail de l'utilisateur, ledit champ étant accessible aux avant-bras de celui-ci par le dessous et latéralement, la face frontale dudit capotage comportant une vitre protectrice caractérisé en ce que le capotage est disposé à une extrémité d'une plaque support dont il est solidaire, l'autre extrémité de ladite plaque étant amenée à se déplacer par coulissement dans un contrepoids venant reposer sur le plan de travail.

On fait référence expressément au travail des prothésistes dentaires. On comprendra que l'invention peut trouver son application dans tout domaine technique où l'utilisateur doit visualiser son champ de travail en toute sécurité pour son visage en particulier, tout en permettant l'accès de ses avant-bras audit champ de travail avec utilisation en particulier d'outils tournants tels que pièces à main. C'est le cas des prothésistes dentaires mais aussi par exemple des diamantaires, des bijoutiers, des podologues, des cordonniers, ceci non limitativement.

On comprendra mieux l'invention à l'aide de la description faite ci-après d'un mode de mise en oeuvre donné à titre d'exemple non limitatif en référence aux dessins annexés dans lesquels :
- la figure 1 est une vue en perspective en élévation latérale d'un descriptif conforme à l'invention disposé sur un plan de travail ;
- la figure 2 est une représentation vue de dessus de la structure de maintien et de déplacement du descriptif de la figure 1.

Le dispositif généralement référencé (1) se compose essentiellement d'un capotage (2) et d'un support (3).

Le capotage (2) est de forme générale en U renversé, permettant d'envelopper par le dessus le champ de travail (4).

Il comporte sur sa face frontale (2') une vitre transparente (9). Il est muni sur ses ailes latérales (2") d'ouvertures (5) permettant le passage des avant-bras de l'utilisateur.

Selon une caractéristique importante du descriptif de l'invention le capotage est conformé de manière à envelopper le champ opératoire seulement par le dessus, l'utilisateur pouvant dégager immédiatement ses mains par le bas en cas d'incident.

Le dispositif (1) est fixé par sa face arrière (2") à une plaque support (6) dont il est solidaire.

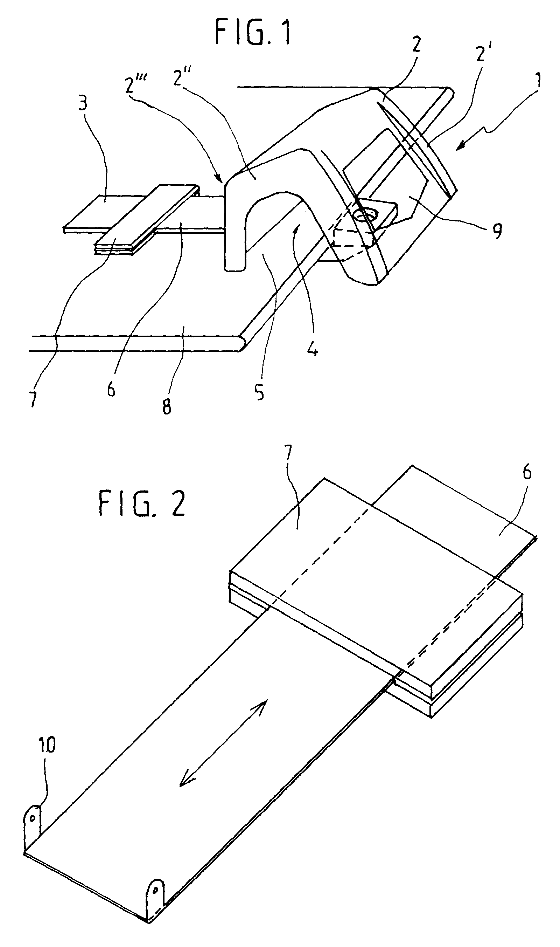

La plaque support (6) représentée plus précisément à la figure 2, est amenée à se déplacer par coulissement dans un contrepoids (7) formant coque.

Le contrepoids aura un poids suffisant pour permettre le maintien du dispositif sur le plan de travail (8) par simple gravité sans risque de basculement.

La plaque (6) sera par exemple en acier inoxydable brossé. Le coulissement de la plaque support (6) dans le contrepoids (7) se fera à frottement, par exemple sur une garniture en matériau synthétique ou analogue.

L'extrémité libre de la plaque (6) sera munie de butées (10) évitant le déboîtement du dispositif.

De manière avantageuse, le dispositif comportera un moyen d'aspiration qui limitera encore le risque de respiration des poussières.

On comprendra que ce dispositif peut être disposé sur n'importe quelle surface plane, de manière non définitive donc non destructive. L'installation est instantanée et offre toutes les garanties de travail en sécurité pour l'utilisateur dans des conditions qui sont même supérieures à celles des dispositifs de l'art antérieur et de tous ceux actuellement proposés aux professionnels.

## Revendications

1. Dispositif de protection permettant le travail dans des conditions de sécurité optimales, en particulier mais non limitativement pour un prothésiste dentaire, du type se composant d'un capotage enveloppant par le dessus le champ de travail de l'utilisateur, ledit champ étant accessible aux avant-bras de celui-ci par le dessous et latéralement, la face frontale dudit capotage comportant une vitre protectrice **caractérisé en ce que** le capotage (2) est disposé à une extrémité d'une plaque support (6) dont il est solidaire, l'autre extrémité de ladite plaque étant amenée à se déplacer par coulissement dans un contrepoids (7) venant reposer sur le plan de travail.

2. Dispositif selon la revendication 1, **caractérisé en ce que** le capotage est de forme générale en U inversé.

3. Dispositif selon l'une quelconque des revendications 1 et 2, **caractérisé en ce que** le contrepoids a un poids suffisant pour permettre le maintien du dispositif sur un plan de travail (8) par simple gravité.

4. Dispositif selon l'une quelconque des revendications 1 à 3, **caractérisé en ce que** la plaque (6) est en acier inoxydable brossé.

5. Dispositif selon l'une quelconque des revendications 1 à 4, **caractérisé en ce que** le coulissement de la plaque support (6) dans le contrepoids (7) s'effectue à frottement.

6. Dispositif selon l'une quelconque des revendications 1 à 5, **caractérisé en ce que** l'extrémité libre de la plaque (6) est munie de butées (8) évitant le déboîtement.

7. Dispositif selon l'une quelconque des revendications 1 à 6, **caractérisé en ce qu'**il comporte un moyen d'aspiration des poussières.
